# EUROPEAN PATENT SPECIFICATION

(11) **EP 0 573 306 B1**
(45) Date of publication and mention of the grant of the patent: **16.08.2000**
(21) Application number: 93304366.3
(22) Date of filing: 04.06.1993
(51) Int. Cl.: A22C 13/00, B32B 27/08, C08L 77/02, B65D 65/40

(54) **Heat shrinkable, shirrable casings containing polyamide/copolyamide blends**
Polyamide/Copolyamide-Mischungen enthaltende wärmeschrumpfbare raffbare Schlauchhülle
Boyau thermorétractable et plissable contenant des mélanges de polyamide/copolyamide

(30) Priority: 05.06.1992 US 893638
(43) Date of publication of application: 08.12.1993
(60) Divisional application: 99121947.8
(73) Proprietor: Cryovac, Inc., Duncan, S.C. 29334-0464 (US)
(72) Inventor: Ahlgren, Kelly R., No. 38 Greenville, SC 29615 (US); Ramesh, Ram K., Greer, SC 29650 (US)
(74) Representative: Bentham, Stephen

(56) References cited:
- EP-A- 0 170 385
- EP-A- 0 325 151
- EP-A- 0 331 509
- EP-A- 0 358 038
- EP-A- 0 408 390
- EP-A- 0 465 931
- WO-A-92/15641
- DE-U- 9 007 334
- DATABASE WPI Week 8640 Derwent Publications Ltd., London, GB; AN 86-260933 (40) & JP 61 188142 A (MITSUBISHI PLASTICS IND.), 21 August 1986 (1986-08-21)

## Description

The present invention relates generally to heat shrinkable, polymeric films and bags which are primarily olefinic but which contain at least one layer of a polyamide/copolyamide blend. More particularly, the present invention relates to such heat shrinkable, polyamide containing structures which are shirred for use in the meat packing industry in cook-in applications.

U.S. Patent No. 4,606,922 discloses a cook-in film which may be optionally biaxially oriented for heat shrinkability. Nylon 6 is employed in the non-shrinkable embodiment.

U.S. Patent No. 5,079,051 is directed to an oriented, heat shrinkable packaging film having a layer of a polyamide or a polyester.

U.S. Patent No. 4,501,798 is directed to a multiple layer polymeric film having a surface layer which may be nylon-6. A process for a uniaxially orienting the film is disclosed.

U.S. Patent No. 4,944,970 is directed to a tubular, biaxially stretch oriented packaging film which includes a polymer mixture of an aliphatic polyamide, a polyterephthalic acid ester, and an aromatic polyamide.

U.S. Patent No. 4,851,245 is directed to a smokable, synthetic food packaging film which includes at least one layer of a mixture of a polyamide and an ethylene vinyl alcohol.

U.S. Patent No. 4,659,599 is directed to a tubular packaging film which includes a polymer mixture of a polyamide and a polyterephthalic acid ester.

U.S. Patent No. 5,094,799 is directed to a process for producing biaxially oriented nylon film wherein orientation of monolayer nylon-6 is achievable through specific regulation of various process parameters.

U.S. Patent No. 4,098,860 is directed to the production of biaxially drawn film of a blend of an aliphatic polyamide and a xylylene containing polyamide.

U.S. Patent No. 4,120,928 discloses the process for preparing a biaxially stretched film of a polyamide or a blend of polyamides.

U.S. Patent No. 5,106,693 is directed to a transparent, gas barrier, multilayer structure having at least one layer of a polyamide composition which is a blend of a first polyamide composed of a homopolyamide or copolyamide of an aromatic dicarboxylic acid as a main acid component and a hexamethylene diamine as a main diamine component and a second polyamide which is a homopolyamide or copolyamide of an adipic dicarboxylic acid as the main acid component and an m-xylylenediamine as the main diamine component.

U.S. Patent No. 4,486,507 is directed to a shrinkable film having at least one layer which is a mixture of a linear polyamide, linear copolyamide, or an elastomeric component and a partially aromatic polyamide or partially aromatic copolyamide.

U.S. Reissue 30,390 is directed to an apparatus and method for producing a food product and more particularly, to an apparatus and method for controlling the uniformity of stuffed diameter and confirmation of the terminal ends of a sausage product. Primarily disclosed are cellulosic casings.

U.S. Patent No. 5,085,890 is directed to a method for making indicia containing processed food products employing indicia casings which are filled with processable food to which the color indicia is transferred during processing. The casings disclosed are manufactured from cellulose.

U.S. Patent No. 4,855,183 is directed to a multiple layer cook-in film from which packages such as bags or casings can be made. The films have a first food contact layer that bindingly adheres during cook-in to a contained meat product of a polyamide or a blend containing a polyamide.

Multilayer films which comprise a layer comprising a blend of polyamides are also disclosed in EP-A-0,331,509, EP-A-0,358,038 and EP-A-0,465,931. In particular EP-A-0,465,931 discloses a film in accordance with the preamble of claim 1.

U.S. Patent No. 4,495,751 is directed to an apparatus and method for packaging articles in a flexible wrapping material. An in-line method for shirring and stuffing polymeric tubing is disclosed.

As is disclosed in US 4,495,751, techniques are known for the automatic and semi-automatic filling of various types of casings with viscous meat emulsion. In general, these techniques include positioning a shirred continuous film casing length over a stuffing horn and thereafter continuously deshirring the casing and stuffing the deshirred casing with viscous meat emulsion fed under pressure through the stuffing horn and into the casing interior. As used in the art, the term "casing" or "tubular casing" generally means tubing of natural or manufactured materials. Natural casings are generally cellulosic. Shirring is the process by which lengths of the tubular material are folded or pleated into a relatively short length. Shirred tubular casings may be provided as "sticks" which are long lengths of casing having a substantially large bore which have been shirred and compressed into short, compact, self-sustaining lengths or which may be a package of shirred and compressed casing sheathed inside a retaining sleeve. Apparatus and processes are well known in the food casing art for producing shirred, tubular casings. Such apparatus may be employed in the preparation of pleated and compressed tubular casings wherein the compression ratios (unshirred to shirred stick length) are in the order of at least about 40:1 and up to about 100:1 or even greater. Using suitable food stuffing machinery, casing lengths can be stuffed and formed into unit size lengths of particulate or comminuted viscous material such as meat emulsions or the like.

During the shirring of polymeric tubing, mineral oil is often coated on the outer surface of the tubing as a processing aid. Specifically, the oil is employed to reduce flex cracking as the film is pleated. The mineral oil has no deleterious effect on the performance of the ultimate casing when the precursor polymeric tubing includes at least one layer of a gas barrier polymer such as ethylene vinyl alcohol. However, for packaging applications which do not require a gas barrier, the polyolefinic structure of conventional non-barrier polymeric casings results in product failure such as splitting during "cook-in".

Polymeric casings such as discussed in the present specification are desirable in that moisture is retained in the food product during "cook-in". The term "cook-in" as used herein is intended to refer to packaging materials structurally capable of withstanding exposure to cook-in time temperature conditions while containing a food product. Cook-in packaged foods include foods cooked in the package in which they are distributed to the consumer and which may be consumed with or without warming. Cook-in time temperature conditions typically refer to long, slow cook. For example submersion in hot water at 55 to 65°C for 1-4 hours is representative of institutional cook-in requirements. Submersion at 70°-100°C for up to about 12 hours probably represents the limiting case.

The food packaging industry needs a packaging film from which bags and casings can be made which are of improved structural soundness such that they may be fully characterized as cook-in. The packaging film must be substantially conformable to the contained food product. Preferably, this substantial conformability is achieved by the film being heat shrinkable under cook-in conditions so as to form a tightly fitting package. In other words, in an advantageous embodiment, the film is heat shrinkable under these time-temperature conditions, i.e. the film possesses sufficient shrink energy such that submerging the packaged food product in hot water will shrink the packaging film snugly around the contained product, representatively up to about 55% monoaxial or biaxial shrinkage but at least 5% shrinkage in at least one direction at 90°C.

Also, the film may desirably have food product adherence to restrict "cook-out" or collection of juices between the surface of the contained food product and the food contact surface of the packaging material during cook-in, thereby increasing product yield. More particularly, in the types of multilayer films wherein the first "food contact" layer is of the type of material that bindingly adheres to a contained food product during cook-in, this first layer may alternatively be referred to as the "adhering layer". As used herein, the term "adhere" is intended to mean that the food contact surface of the film bonds during cook-in to the contained food product to an extent sufficient to substantially prevent accumulation of fluids between the film and the contained product.

Additionally, the food contact layer may serve as a heat seal layer. However, any heat seal must be able to withstand standard cook conditions. Because of the difficulty of providing such a seal as well as, optionally, adhesion to the food product, and because of the preferred sausage-like shape which is desirable in the final food product, casings are often clipped rather than heat sealed.

In one conventional method of manufacturing heat shrinkable film, a tubular orientation process is utilized. The tubing may optionally be irradiated prior to or following orientation. A primary tube of the film is biaxially oriented by stretching with internal pressure in the transverse direction and with the use of pinch rolls at different speeds in the machine direction. Then the stretched bubble is collapsed, and the film is wound up as flattened, seamless, tubular film to use later to make casings, as described above, or bags, e.g. either end-seal bags typically made by transversely heat sealing across the width of flattened tubing followed by severing the tubing so that the transverse seal forms the bag bottom, or side-seal bags in which the transverse heat seals form the bag sides and one edge of the tubing forms the bag bottom.

Such bags are typically used by placing the food product in the bag, evacuating the bag, either heat-sealing the bag mouth or gathering and applying a metal clip around the gathered mouth of the bag to form a seal, and then immersing the bag in hot water at approximately the same temperature at which the film was stretch-oriented, typically about 160° to 205°F. (71° to 96°C), hot water immersion being one of the quickest and most economical means of transferring sufficient heat to the film to shrink it uniformly. Alternatively, the bag may serve as a liner of a cooking mold.

It is therefore an object of the present invention to provide a polymeric shirrable, cook-in film for use in the meat packing industry.

It is yet another object of the present invention to provide a heat shrinkable, gas permeable, predominately olefinic film with improved oil resistance.

It is still a further object of the present invention to provide a method for producing a heat shrinkable film having at least one interior layer which is predominately nylon 6.

The present invention provides an article in the form of a bag or casing comprising a heat-shrinkable, biaxially-oriented, thermoplastic, multilayer cook-in film, wherein the film comprises:
(a) a first outer film layer having mineral oil at the outer surface thereof;
(b) a second film layer comprising a polyolefin;
(c) an intermediate film layer comprising nylon 6 blended with at least 5% by weight of a copolyamide between the first and second layers;
wherein the intermediate layer is an oil-barrier layer having a thickness of less than 15% based on the total thickness of the multilayer film.

The invention further provides a packaged product comprising an article of the invention having a food product, such as ham, therein.

The present invention uses a biaxially oriented, heat shrinkable, thermoplastic film containing nylon 6, i.e. polycaprolactam. The prior art has shown that orientation of nylon 6 at high temperatures or high rates of speed is not feasible. For example, in a trapped bubble process such as described above, attempts to orient thermoplastic film containing nylon 6 out of boiling water or near boiling water temperature have failed because of bubble breakage, believed to be caused by the crystallization of nylon 6 at those temperatures.

In order to achieve such orientation, the prior art teaches orientation at low temperatures, low rates of speed, through special process designs, or by careful regulation of process parameters. In the present invention it has been found that thermoplastic films containing nylon 6 may be readily oriented in a conventional trapped bubble process by the addition at least 5% by weight of a copolyamide to the nylon 6. For purposes of the present invention, any copolyamide obtained by copolymerization of at least two different precursor polyamides is acceptable. Preferred copolyamides include nylon 6/12, nylon 6/69, and nylon 66/610.

The present invention is more particularly concerned with the provision of a heat shrinkable, non-barrier, shirrable, cook-in film. However, it should be noted that in addition to those resins traditionally considered as gas barriers, that is, ethylene vinyl alcohol, acrylonitriles, and vinylidene chloride copolymers such as vinylidene chloride/vinyl chloride, and vinylidene chloride/methyl acrylate, nylons are often considered to be gas barrier resins. The specific definition of a gas barrier will vary depending on the end-use application of the film in question. It is well known that the permeability of any polyamide film will decrease with increasing thickness. Thus, oriented nylon films in accordance with the present invention may be employed in gas barrier applications. Further, the present method for orienting nylon 6-containing films is applicable to films which also include a barrier such as EVOH as is shown in Examples 7 - 11, below. However, for purposes of the present embodiment, a non-barrier film is provided.

Specifically, in many cook-in applications a more expensive barrier structure containing typically EVOH, is not required. A less expensive, non-barrier film is often employed for cook and strip applications where the cook-in bag or casing is not retained for distribution of the product to the consumer. Such non-barrier materials are typically comprised of polyolefins and are often supplied to the meat packing industry in the form of shirred casings. As discussed above, mineral oil is often coated on the exterior of the thermoplastic tubing to aid in the shirring process. However, such oil adversely acts as a plasticizer on the polyolefinic film. For barrier applications, the film is typically protected from the oil by the gas barrier resin. However, for non-barrier applications, the plasticizing action of the mineral oil causes a high rate of product failure during cook-in.

It has been found in accordance with the present invention that a relatively thin layer of nylon 6 in a thickness insufficient for gas barrier properties, less than 15% of the total thickness of the structure, provides excellent oil resistance. However, it was found that even a minor amount of nylon 6 in an internal layer of a polyolefinic film causes difficulty in the orientation process, requiring lowering of the orientation temperature, slowing of the orientation speed, or both. However, lower orientation temperatures result in a less desirable product appearance and slow orientation rates are obviously undesirable from a manufacturing perspective.

Thus, it has been found in accordance with the present invention that the processability of films containing one or more layers of nylon 6 may be greatly improved by the addition of at least 5% by weight of a copolyamide to the nylon 6. However, the nylon 6/copolyamide blend may contain from about 10% to about 95% by weight of nylon 6 and from about 90% to about 5% by weight of copolyamide. Preferably, the nylon 6/copolyamide blend contains from about 60% to about 95% by weight of nylon 6 and from about 40% to about 5% by weight of copolyamide. Optimally, the blend is from about 85% to about 95% by weight of nylon 6 and from about 15% to about 5% by weight of copolyamide.

The following examples are illustrative of the invention.

Cook-in films having the following layers were prepared by a conventional extrusion process.

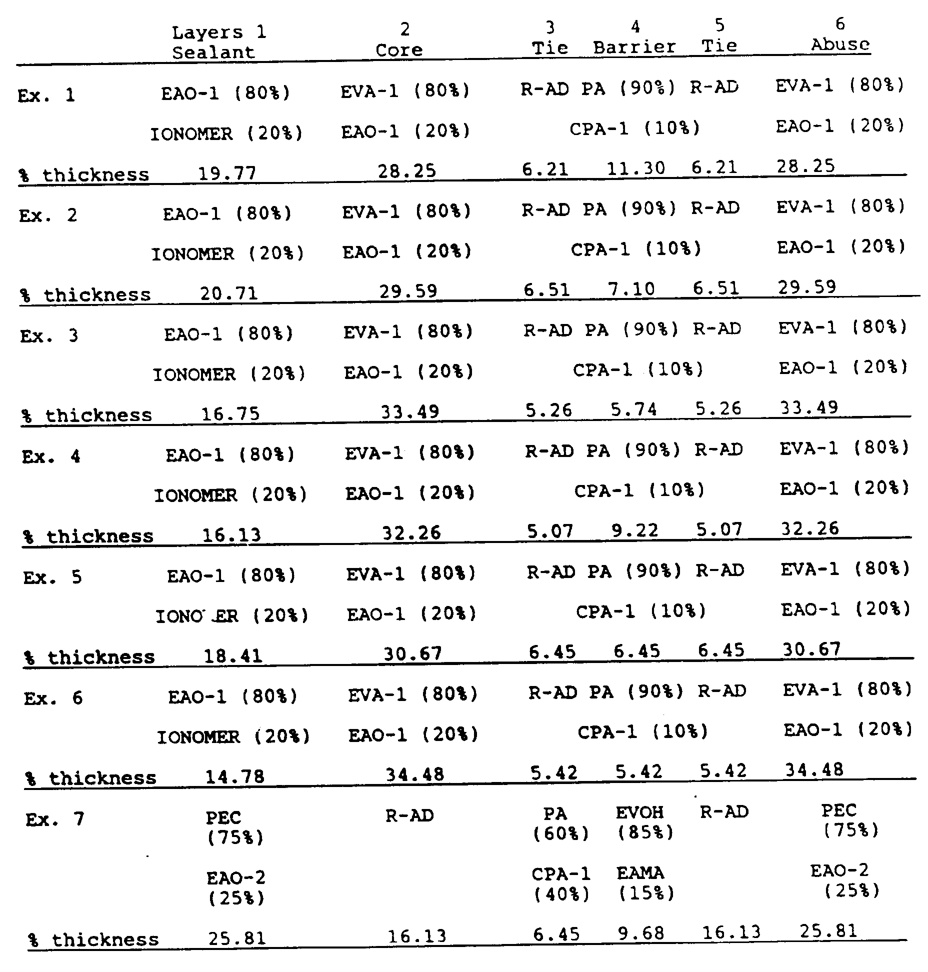

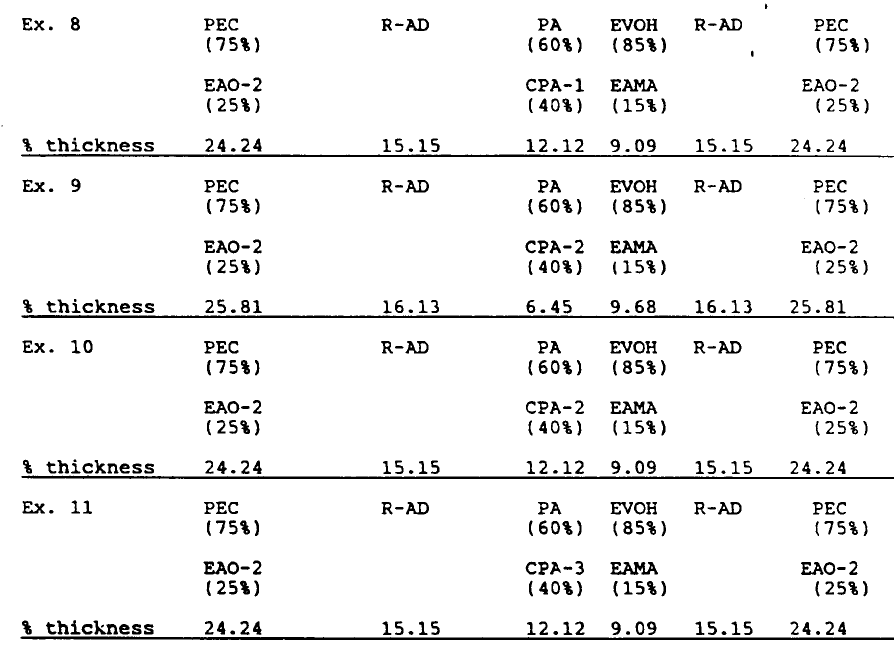

In the foregoing Examples the following materials were employed:
- IONOMER: Surlyn 1650 from DuPont, a zinc salt of ethylene methacrylic acid
- EVA-2: Elvax 3128 from DuPont, an ethylene vinyl acetate having 8.9% by weight of vinyl acetate
- PA: 8209F from Allied Signal, a Nylon 6 homopolymer; Examples 1-4 employ 8209FN, the nucleated version of this Nylon 6
- CPA-1: XE 3303 from Emser, a Nylon 66/610 copolymer
- CPA-2: Grilon CF62BSE from Emser, a Nylon 6/69 copolymer
- CPA-3: Grilon CF6S from Emser, a Nylon 6/12 copolymer
- EVOH: Ethylene vinyl alcohol copolymer, Eval LC-E105A sold by Eval of America
- R-AD: Ethylene alpha-olefin polymer Tymor™ 1203, sold by Morton International, Rubber modified and maleic anhydride grafted
- PEC: Fina 8473 from Fina, a propylene ethylene copolymer having 3.1% by weight of ethylene
- EAO-1: ethylene 1-octene copolymer, Dowlex™ 2045 sold by Dow Chemical
- EAO-2: Tafmer A-4085 from Mitsui, an ethylene butene copolymer
- EAMA: Lotader 3200 from Atochem, an ethylene acrylic acid maleic anhydride terpolymer

The cook-in films of Examples 1-10 were all oriented out of hot water at approximately 98°C (208°F) in a trapped bubble process as described above.

The cook-in films of Examples 1-4 were coated with mineral oil and cook-tested. Three cook-tests were conducted. Sample casings of each film were filled with water, a water/oil mixture, and water massaged ham, respectively, and subjected to standard cook-in conditions. All samples survived the cook-tests and yielded acceptable end products.

The cook-in films of Examples 5 and 6 were coated with mineral oil, shirred and cook-tested. Three cook-tests were conducted. Sample casings of each film were filled with water, a water/oil mixture, and water massaged ham, respectively, and subjected to standard cook-in conditions. All samples survived the cook-tests and yielded acceptable end products.

The foregoing description of preferred embodiments of the invention have been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto.

## Claims

1. An article in the form of a bag or a casing comprising a heat-shrinkable, biaxially oriented, thermoplastic, multilayer cook-in film wherein the film comprises at least:
(a) a first outer film layer;
(b) a second film layer comprising a polyolefin; and
(c) an intermediate film layer between the first and second layers comprising nylon 6 blended with at least 5% by weight of a copolyamide;
characterised in that the first outer layer has mineral oil at the outer surface thereof and the intermediate layer is an oil-barrier layer having a thickness of less than 15% based on the total thickness of the multilayer film.

2. An article according to claim 1, which is a shirred or shirrable casing.

3. An article according to claim 1 or 2, wherein the copolyamide comprises a copolymer of nylon 6 and nylon 12.

4. An article according to claim 1 or 2, wherein the copolyamide comprises a copolymer of nylon 66 and nylon 610.

5. An article according to claim 1 or 2, wherein the copolyamide comprises a copolymer of nylon 6 and at least one other polyamide.

6. An article according to any one of the preceding claims, wherein the nylon 6/copolyamide blend comprises from 60% to 95% by weight of nylon 6 and from 40% to 5% by weight of a copolyamide.

7. An article according to claim 6, wherein the nylon 6/copolyamide blend comprises from 85% to 95% by weight of nylon 6 and from 15% to 5% by weight of a copolyamide.

8. An article according to any one of the preceding claims, wherein the film is irradiated.

9. An article according to any one of the preceding claims, wherein the film has a shrinkage value in at least one direction of at least 5% at 90°C.

10. An article according to any of the preceding claims wherein the film comprises, sequentially, the following layers:
(a) a sealant layer comprising a blend of ethylene 1-octene copolymer and ionomer;
(b) a core layer comprising a blend of ethylene vinyl acetate and ethylene 1-octene copolymer;
(c) a first tie layer comprising modified ethylene alpha-olefin;
(d) a layer comprising nylon 6 blend with at least about 5% by weight of copolyamide;
(e) a second tie layer comprising modified ethylene alpha-olefin; and
(f) an abuse layer comprising a blend of ethylene vinyl acetate and ethylene 1-octene copolymer having mineral oil at the outer surface thereof.

11. An article according to any one of the claims 1 to 9 wherein the film comprises, sequentially, the following layers:
(a) a sealant layer comprising a blend of propylene ethylene copolymer and ethylene butene copolymer;
(b) a first layer comprising modified ethylene alpha-olefin,
(c) a layer comprising nylon 6 blend with at least about 5% by weight of copolyamide;
(d) a barrier layer comprising ethylene vinyl alcohol copolymer;
(e) a second layer comprising modified ethylene alpha-olefin; and
(f) an abuse layer comprising a blend of propylene ethylene copolymer and ethylene butene copolymer having mineral oil at the outer surface thereof.

12. A packaged product comprising an article according to any one of the preceding claims having a food product therein.

13. A packaged product according to claim 12 wherein the product is meat.

14. A packaged product according to claim 13, wherein the cooked meat is ham.

## Patentansprüche

1. Gegenstand in Form eines Beutels oder einer Hülle, der bzw. die wärmeschrumpfbare, biaxial orientierte, thermoplastische, mehrschichtige Kochfolie umfaßt, wobei die Folie mindestens
(a) eine erste außenliegende Folienschicht,
(b) eine zweite Folienschicht, die ein Polyolefin umfaßt, und
(c) eine Zwischenfolienschicht zwischen der ersten und der zweiten Schicht umfaßt, die Nylon 6 gemischt mit mindestens 5 Gew.% Copolyamid umfaßt,
dadurch gekennzeichnet, daß die erste außenliegende Folienschicht Mineralöl auf ihrer außenliegenden Oberfläche aufweist und die Zwischenschicht eine Ölsperrschicht mit einer Dicke von weniger als 15 % ist, bezogen auf die Gesamtdicke der Mehrschichtenfolie.

2. Gegenstand nach Anspruch 1, der eine gekräuselte oder kräuselbare Hülle ist.

3. Gegenstand nach Anspruch 1 oder 2, bei dem das Copolyamid ein Copolymer von Nylon 6 und Nylon 12 umfaßt.

4. Gegenstand nach Anspruch 1 oder 2, bei dem das Copolyamid ein Copolymer von Nylon 66 und Nylon 610 umfaßt.

5. Gegenstand nach Anspruch 1 oder 2, bei dem das Copolyamid ein Copolymer aus Nylon 6 und mindestens einem anderen Polyamid umfaßt.

6. Gegenstand nach einem der vorhergehenden Ansprüche, bei dem das Nylon 6/Copolyamid-Gemisch 60 bis 95 Gew.% Nylon 6 und 40 bis 5 Gew.% Copolyamid umfaßt.

7. Gegenstand nach Anspruch 6, bei dem das Nylon 6/Copolyamid-Gemisch 85 bis 95 Gew.% Nylon 5 und 15 bis 5 Gew.% Copolyamid umfaßt.

8. Gegenstand nach einem der vorhergehenden Ansprüche, bei dem die Folie bestrahlt ist.

9. Gegenstand nach einem der vorhergehenden Ansprüche, bei dem die Folie einen Schrumpfungswert in mindestens einer Richtung von mindestens 5 % bei 90°C hat.

10. Gegenstand nach einem der vorhergehenden Ansprüche, bei dem die Folie aufeinanderfolgend die folgenden Schichten umfaßt:
(a) eine Siegelungsschicht, die ein Gemisch aus Ethylen/1-Octen-Copolymer und Ionomer umfaßt,
(b) eine Kernschicht, die ein Gemisch aus Ethylen/Vinylacetat und Ethylen/1-Octen-Copolymer umfaßt,
(c) eine erste Verbindungsschicht, die modifiziertes Ethylen/α-Olefin umfaßt,
(d) eine Schicht, die Nylon 6-Gemisch mit mindestens etwa 5 Gew.% Copolyamid umfaßt,
(e) eine zweite Verbindungsschicht, die modifiziertes Ethylen/α-Olefin umfaßt, und
(f) eine Schutzschicht, die ein Gemisch aus Ethylen/Vinylacetat und Ethylen/1-Octen-Copolymer umfaßt und Mineralöl an ihrer außenliegenden Oberfläche aufweist.

11. Gegenstand nach einem der Ansprüche 1 bis 9, bei dem die Folie aufeinanderfolgend die folgenden Schichten umfaßt:
(a) eine Siegelungsschicht, die ein Gemisch aus Propylen/Ethylen-Copolymer und Ethylen/Buten-Copolymer umfaßt,
(b) eine erste Schicht, die modifiziertes Ethylen/α-Olefin umfaßt,
(c) eine Schicht, die Nylon 6-Gemisch mit mindestens etwa 5 Gew.% Copolyamid umfaßt,
(d) eine Sperrschicht, die Ethylen/Vinylalkohol-Copolymer umfaßt,
(e) eine zweite Schicht, die modifiziertes Ethylen/α-Olefin umfaßt, und
(f) eine Schutzschicht, die ein Gemisch aus Propylen/Ethylen-Copolymer und Ethylen/Buten-Copolymer umfaßt und Mineralöl auf ihrer außenliegenden Oberfläche aufweist.

12. Verpacktes Produkt, das einen Gegenstand gemäß einem der vorhergehenden Ansprüche mit einem darin enthaltenen Nahrungsmittelprodukt umfaßt.

13. Verpacktes Produkt nach Anspruch 12, bei dem das Produkt Fleisch ist.

14. Verpacktes Produkt nach Anspruch 13, bei dem das gegarte Fleisch Schinken ist.

## Revendications

1. Article sous la forme d'un sac ou d'un boîtier comprenant un film multicouche thermoplastique biaxialement orienté thermorétractable de cuisson où le film comprend au moins:
(a) une première couche du film externe;
(b) une seconde couche de film externe comprenant une polyoléfine; et
(c) une couche de film intermédiaire entre les première et seconde couches, comprenant du nylon 6 mélangé à au moins 5% en poids d'un copolyamide;
caractérisé en ce que la première couche externe a une huile minérale à sa surface externe et la couche intermédiaire est une couche formant barrière contre l'huile ayant une épaisseur de moins de 15% en se basant sur l'épaisseur totale du film multicouche.

2. Article selon la revendication 1, qui est un boîtier froncé ou fronçable.

3. Article selon la revendication 1 ou 2, où le copolyamide comprend un copolymère de nylon 6 et de nylon 12.

4. Article selon la revendication 1 ou 2, où le copolyamide comprend un copolymère de nylon 66 et de nylon 610.

5. Article selon la revendication 1 ou 2, où le copolyamide comprend un copolymère de nylon 6 et d'au moins un autre polyamide.

6. Article selon l'une quelconque des revendications précédentes où le mélange nylon 6/copolyamide comprend de 60% à 95% en poids de nylon 6 et de 40% à 5% en poids d'un copolyamide.

7. Article selon la revendication 6, où le mélange nylon 6/copolyamide comprend 85% à 95% en poids de nylon 6 et 15% à 5% en poids d'un copolyamide.

8. Article selon l'une quelconque des revendications précédentes, où le film est irradié.

9. Article selon l'une quelconque des revendications précédentes, où le film a une valeur de retrait dans au moins une direction d'au moins 5% à 90°C.

10. Article selon l'une quelconque des revendications précédentes où le film comprend, séquentiellement, les couches suivantes:
(a) une couche d'un agent d'étanchéité comprenant un mélange d'un copolymère d'éthylène 1-octène et d'un ionomère;
(b) une couche de coeur comprenant un mélange d'un copolymère d'éthylène acétate de vinyle et d'éthylène 1-octène;
(c) une première couche d'attache comprenant une alpha-oléfine modifiée par de l'éthylène;
(d) une couche comprenant du nylon 6 mélangé avec au moins environ 5% en poids du copolyamide;
(e) une seconde couche d'attache comprenant une alpha-oléfine modifiée par de l'éthylène; et
(f) une couche anti-violation comprenant un mélange d'un copolymère d'éthylène acétate de vinyle et d'éthylène 1-octène ayant une huile minérale à sa surface externe.

11. Article selon l'une quelconque des revendications 1 à 9 où le film comprend, séquentiellement, les couches suivantes:
(a) une couche d'un agent d'étanchéité comprenant un mélange d'un copolymère de propylène éthylène et un copolymère d'éthylène butène;
(b) une première couche comprenant une alpha-oléfine modifiée par de l'éthylène,
(c) une couche comprenant du nylon 6 mélangé avec au moins environ 5% en poids de copolyamide;
(d) une couche formant barrière comprenant un copolymère d'éthylène alcool vinylique;
(e) une seconde couche comprenant une alpha-oléfine modifiée par de l'éthylène; et
(f) une couche anti-violation comprenant un mélange d'un copolymère de propylène éthylène et d'un copolymère d'éthylène butène ayant de l'huile minérale à sa surface externe.

12. Produit emballé comprenant un article selon l'une quelconque des revendications précédentes contenant un produit alimentaire.

13. Produit emballé selon la revendication 12 où le produit est de la viande.

14. Produit emballé selon la revendication 13 où la viande cuite est du jambon.
